# EUROPEAN PATENT APPLICATION

(11) **EP 4 573 913 A1**
(43) Date of publication of application: **25.06.2025**
(21) Application number: 23888609.7
(22) Date of filing: 02.11.2023
(51) Int. Cl.: A22C 17/00, B26D 5/24, B26D 7/02

(54) **CUTTING POSITION IDENTIFICATION SYSTEM AND CUTTING POSITION IDENTIFICATION METHOD**

(30) Priority: 08.11.2022 JP 2022178775
(71) Applicant: MAYEKAWA MFG. CO., LTD., Tokyo 135-8482 (JP)
(72) Inventor: NOAKE, Tomoya, Tokyo 135-8482 (JP); HIRAYAMA, Junta, Tokyo 135-8482 (JP); TOKUMOTO, Masaru, Tokyo 135-8482 (JP); HINO, Kazuchika, Tokyo 135-8482 (JP); TOYOSHIMA, Katsumi, Tokyo 135-8482 (JP)
(74) Representative: Regimbeau
(86) International application number: PCT/JP2023/039559
(87) International publication number: WO 2024/101261

(57) **Abstract**

A cutting position identification system is provided with an imaging device and an identification device for identifying a cutting position of a pair of carcasses which has been divided into right and left halves along a spine. The imaging device is disposed on a breast side of at least one of the pair of carcasses relative to a reference line that extends from the spine in a direction perpendicular to a cut surface of the carcass. The identification device is configured to identify the cutting position that passes between ribs using an image captured by the imaging device.

## Description

### TECHNICAL FIELD

The present disclosure relates to a cutting position identification system and a cutting position identification method.

### BACKGROUND

For example, in the meat processing of relatively large livestock such as pigs and cattle, pre-processed meat is cut into right and left halves by splitting it down the spine (backbone) to create a pair of carcasses, and each carcass is further cut into anterior and posterior parts. Such cutting processes have conventionally been performed manually by workers using knives, but automation using meat processing machinery is desired to ensure uniform quality and worker safety, as well as to improve processing efficiency. For example, Patent Document 1 discloses techniques related to a cutting device and a cutting method in a major dividing process of carcasses. This document describes that a pair of suspended carcasses to be cut is supported by a support bar extending from front to back along a substantially horizontal direction, which fixes the posture of the carcasses during cutting.

### Citation List

### Patent Literature

Patent Document 1: JP2013-31916A

### SUMMARY

### Problems to be Solved

In order to automate the carcass cutting process as described in Patent Document 1, it is necessary to identify the cutting position of the carcass as a preliminary step in the carcass cutting process. As one method to identify the cutting position, the cutting position can be determined based on features of the carcass extracted by analyzing images obtained by imaging the carcass. Extraction of features from such images is expected to improve accuracy by applying prediction techniques using learning models. In this case, the learning model can be constructed by preparing teacher data that teaches the relationship between images and features and using the teacher data to train the prediction model.

As the features for identifying the cutting position of the carcass, vertebra constituting the spine on the back side of the carcass and ribs on the breast side of the carcass can be used to determine the cutting line connecting the specific vertebrae and rib. In order to identify such a cutting line using a learning model, it is necessary to specify the specific vertebrae and rib on images captured by an imaging device for the teacher data used to train the learning model. However, in images obtained by an imaging device placed in front of the carcass, the connection between a curved rib and the spine is difficult to recognize because of the blind spot or shadow of the imaging device. This makes it difficult to accurately specify the specific vertebrae and rib for creating the teacher data. If the learning model is trained based on such images, the accuracy of the prediction of the cutting position degrades.

At least one embodiment of the present disclosure was made in view of the above circumstances, and an object thereof is to provide a cutting position identification system and a cutting position identification method whereby it is possible to accurately identify the carcass cutting position.

### Solution to the Problems

In order to solve the above problem, a cutting position identification system according to at least one embodiment of the present disclosure, for identifying a cutting position of a pair of carcasses which has been divided into right and left halves along a spine, is provided with: at least one imaging device disposed on a breast side of at least one of the pair of carcasses relative to a reference line that extends from the spine in a direction perpendicular to a cut surface of the carcass; and an identification device for identifying the cutting position that passes between ribs using an image captured by the at least one imaging device.

In order to solve the above problem, a cutting position identification method according to at least one embodiment of the present disclosure, for identifying a cutting position of a pair of carcasses which has been divided into right and left halves along a spine, includes: a step of imaging at least one of the pair of carcasses by at least one imaging device disposed on a breast side of the carcass relative to a reference line that extends from the spine in a direction perpendicular to a cut surface of the carcass; and a step of identifying the cutting position that passes between ribs using the image.

### Advantageous Effects

At least one embodiment of the present disclosure provides a cutting position identification system and a cutting position identification method whereby it is possible to accurately identify the carcass cutting position.

### BRIEF DESCRIPTION OF DRAWINGS

FIG. 1 is a schematic front view of a pair of carcasses.
FIG. 2 is a configuration diagram of a cutting position identification system according to an embodiment.
FIG. 3 is a flowchart of a cutting position identification method performed by the cutting position identification system of FIG. 2.
FIG. 4 is a schematic diagram showing the arrangement layout of the imaging device according to a reference art, as viewed from above the pair of carcasses.
FIG. 5 is an example of an image captured by the imaging device of FIG. 4.
FIG. 6 is a schematic diagram showing the arrangement layout of the imaging device according to an embodiment, as viewed from above the pair of carcasses.
FIG. 7 is an example of an image captured by the imaging device of FIG. 6.
FIG. 8 is a schematic diagram showing the arrangement layout of the imaging device according to another embodiment, as viewed from above the pair of carcasses.
FIG. 9 is a modified example of FIG. 8.
FIG. 10 is a schematic diagram showing the arrangement layout of the imaging device according to another embodiment, as viewed from above the pair of carcasses.
FIG. 11 is a schematic diagram showing the arrangement layout of the imaging device according to another embodiment, as viewed from above the pair of carcasses.

### DETAILED DESCRIPTION

Embodiments of the present invention will now be described in detail with reference to the accompanying drawings. It is intended, however, that unless particularly identified, dimensions, materials, shapes, relative positions and the like of components described or shown in the drawings as the embodiments shall be interpreted as illustrative only and not intended to limit the scope of the present invention.

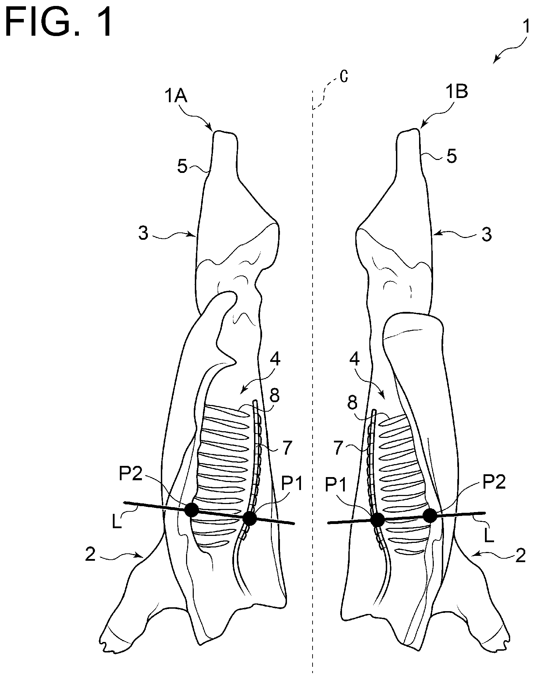

First, with reference to FIG. 1, a carcass 1 to be targeted by a cutting position identification device according to at least one embodiment of the present disclosure will be described. FIG. 1 is a schematic front view of a pair of carcasses 1.

The pair of carcasses 1 is meat of relatively large livestock such as pigs and cattle which has been divided into right and left halves along a spine 7 (backbone). The pair of carcasses 1 includes a left carcass 1A and a right carcass 1B. The pairs of carcasses 1 is arranged symmetrically about the central axis C, with the anterior part 2 of each carcass facing down (the posterior part 3 facing up), the dorsal side facing inward (the ventral side facing outward), and a cut surface 4, where the spine 7 and ribs 8 can be seen, facing frontward. The left carcass 1A and the right carcass 1B may have strictly different parts, but in the following description, they will be described as having substantially equal shapes. The pair of carcasses is suspended and supported by holding the legs 5, which are shown at the top of FIG. 1, by means of a clamping mechanism (not shown).

Next, a cutting position identification system 10 for identifying the cutting position of the pair of carcasses 1 having the above configuration will be described. The cutting position identification system 10 is a system for identifying a cutting position L where the anterior parts 2 of the pair of carcasses 1 are to be cut. The cutting position L is identified by image analysis using an image captured by the imaging device 12 of the cutting position identification system 10, as described below. The following describes the case where image analysis identifies the cutting position L as a straight line connecting the first feature point P1 corresponding to the connection between a specific vertebra and rib (in FIG. 1, between the third and fourth connections from the bottom) on the back side of the carcass 1 and the second feature point P2 corresponding to a specific rib (in FIG. 1, between the third and fourth ribs from the bottom) on the breast side of the carcass 1. However, the cutting position L may be identified based on other feature points extracted by image analysis.

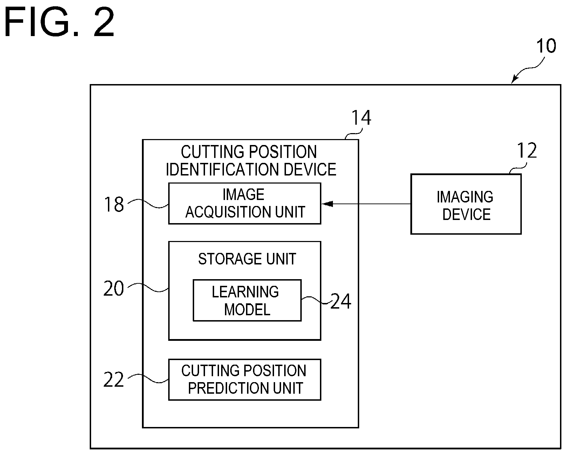

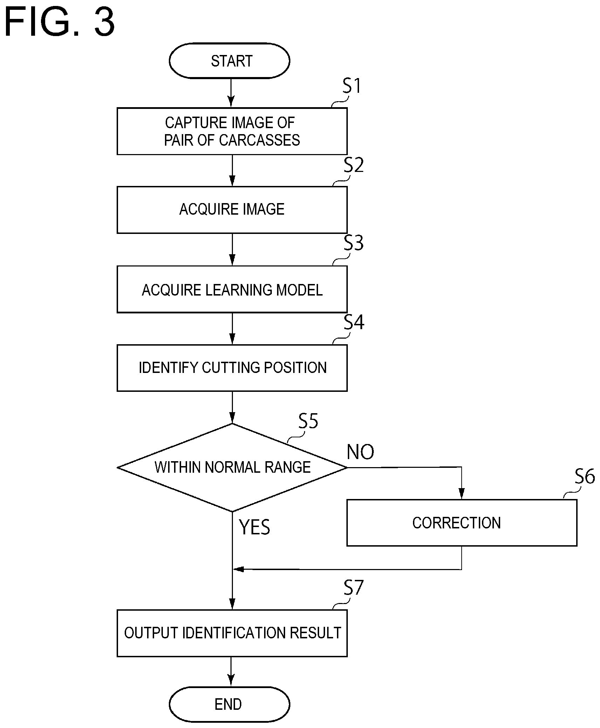

Next, the cutting position identification system 10 for identifying the cutting position L will be described. FIG. 2 is a configuration diagram of the cutting position identification system 10 according to an embodiment. FIG. 3 is a flowchart of a cutting position identification method performed by the cutting position identification system 10 of FIG. 2.

The cutting position identification system 10 is a system for identifying the cutting position L of the pair of carcasses 1 and is equipped with at least one imaging device 12 and a cutting position identification device 14.

The imaging device 12 may be a camera or other device positioned opposite the cut surface 4 of the pair of carcasses 1 to image the pair of carcasses 1. The image captured by the imaging device 12 may be a still image or a moving image. The number of imaging devices 12 can be one or more (illustrative arrangement of imaging device 12 will be described later).

The cutting position identification device 14 is used to identify the cutting position L of the pair of carcasses 1 using the image captured by the imaging device 12 and includes, for example, a Central Processing Unit (CPU), a Random Access Memory (RAM), a Read Only Memory (ROM), a computer-readable storage medium, and the like. Then, a series of processes for realizing various functions is stored in the storage medium or the like in the form of a program, as an example. The CPU reads the program out to the RAM or the like and executes processing/calculation of information, thereby realizing the various functions. The program may be installed in the ROM or another storage medium in advance, or may be stored in the computer-readable storage medium and provided, or may be distributed through wired or wireless communication means, for example. The computer-readable storage medium may be a magnetic disk, a magneto-optical disk, a CD-ROM, a DVD-ROM, or a semiconductor memory.

FIG. 2 shows the functional configuration of the cutting position identification device 14 of the cutting position identification system 10, including an image acquisition unit 18, a storage unit 30, and a cutting position prediction unit 22.

The image acquisition unit 18 is configured to acquire the image captured by the imaging device 12.

The storage unit 20 is configured to store various data necessary for the arithmetic processing of the cutting position identification device 14 and stores a learning model 24 used for predicting the cutting position L. The learning model 24 is a prediction model for predicting the cutting position L based on the image acquired by the image acquisition unit 18 as input, and is trained in advance using teacher data. The training of the learning model 24 is performed by specifying the first feature point P1 and the second feature point P2 for identifying the cutting position L in each of the sufficient sample images prepared as teacher data.

The cutting position prediction unit 22 is configured to predict the cutting position L in the image acquired by the image acquisition unit 18. Specifically, the cutting position prediction unit 22 obtains the prediction result of the cutting position L by inputting the image acquired by the image acquisition unit 18 to the learning model 24 stored in the storage unit 20. The cutting position L predicted by the cutting position prediction unit 22 is output as the identification result of the cutting position identification device 14.

In the cutting position identification method, a pair of carcasses 1 is first imaged by the imaging device 12 (step S1), and the image captured by the imaging device 12 is acquired by the image acquisition unit 18 (step S2).

The cutting position prediction unit 22 then accesses the storage unit 20 to obtain the learning model 24 that has been trained in advance using teacher data (step S3), and predicts a cutting position L by inputting the image acquired in step S2 to the learning model 24 (step S4).

It is determined whether the cutting position L predicted in step S4 is within the normal range (step S5). Step S5 is performed, for example, by superimposing the cutting position L predicted in step S4 on the image acquired in step S2 so that the operator can check whether the cutting position L predicted in step S4 is within the normal range or not. If the cutting position L is out of the normal range (step S5: NO), the cutting position L is corrected by the operator's operation (step S6), and the corrected cutting position L is output as the identification result (step S7).

If the cutting position L is within the normal range (step S5: YES), the prediction result of the cutting position prediction unit 22 is output as is (step S7).

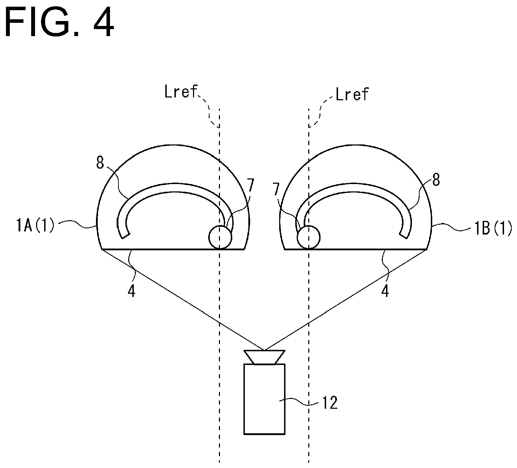

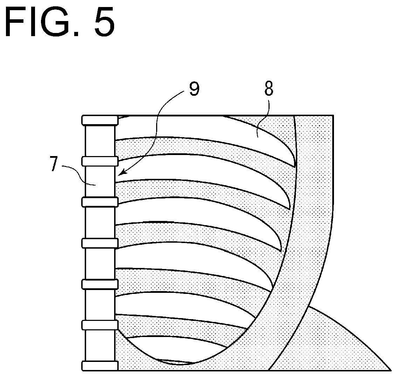

Next, an illustrative arrangement of the imaging device 12 of the cutting position identification system 10 will be described. First, before describing the arrangement layout of the imaging device 12 according to some embodiments of the present disclosure, the arrangement layout of the imaging device 12 according to a reference art will be described. FIG. 4 is a schematic diagram showing the arrangement layout of the imaging device 12 according to the reference art, as viewed from above the pair of carcasses 1. FIG. 5 is an example of the image captured by the imaging device 12 of FIG. 4.

As shown in FIG. 4, in the reference art, the imaging device is in front of the pair of carcasses 1 (on the back side of a reference line Lref, which will be described below). In the carcass 1, the ribs 8 are curved and connected to the spine 7 on the back side of paper in FIG. 5. Therefore, in an image captured by the imaging device 12 arranged as in the reference art, as shown in FIG. 5, the connection portion 9 between a curved rib 8 and the spine 7 is difficult to recognize because of the blind spot or shadow of the imaging device 12. Therefore, using a learning model 24 that has been trained with images acquired by the imaging device 12 arranged as in FIG. 4 as teacher data degrades the prediction accuracy of the cutting position L. According to the inventors' verification, the prediction accuracy was only 60-85%. Such problems can be suitably solved by the arrangement layout of the imaging device 12 as described below.

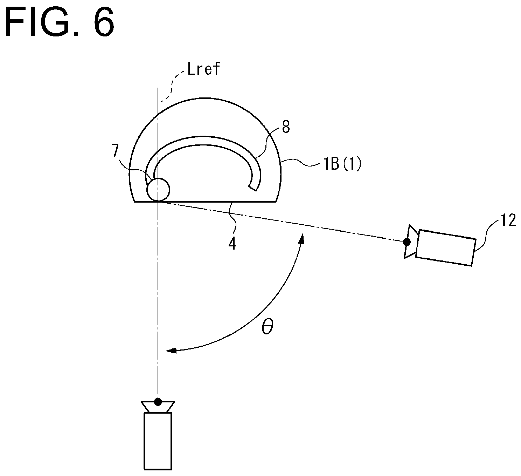

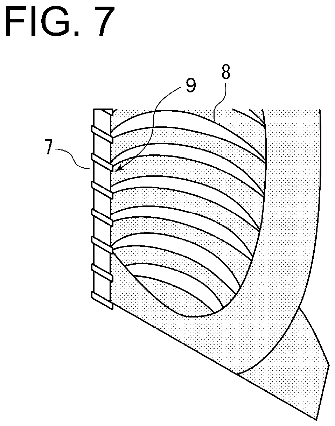

FIG. 6 is a schematic diagram showing the arrangement layout of the imaging device 12 according to an embodiment, as viewed from above the pair of carcasses 1. FIG. 7 is an example of the image captured by the imaging device 12 of FIG. 6. In FIGs. 6 and 7, the focus is on the right carcass 1B of the pair of carcasses 1, but the same applies to the left carcass 1A unless otherwise noted.

As shown in FIG. 6, the imaging device 12 is disposed on the breast side of the carcass 1 relative to a reference line Lref that extends from the spine 7 in a direction perpendicular to the cut surface 4 of the carcass 1. This makes it possible to capture an image in which the connection portion 9 is less likely to be in a blind spot or shadow than when the imaging device 12 is disposed dorsal to the reference line Lref as in FIG. 4. In other words, in this embodiment, the imaging device 12 is arranged so that at least part of the connection portion 9 between the spine 7 and the ribs 8 is captured.

More preferably, the imaging device 12 may be arranged so that the angle θ is in the range of 0 to 80 degrees, where θ is defined as the angle formed by the line passing through the spine 7 and the imaging device 12 with respect to the reference line Lref. This facilitates capturing an image that includes at least part of the connection portion 9.

The cutting position identification system 10 can accurately identify the cutting position L of the carcass 1 by using the learning model 24 that has been trained with images acquired by the imaging device 12 thus arranged as teacher data. According to the inventor's verification, the prediction accuracy could achieve 95% or more, which is a significant improvement over the reference art.

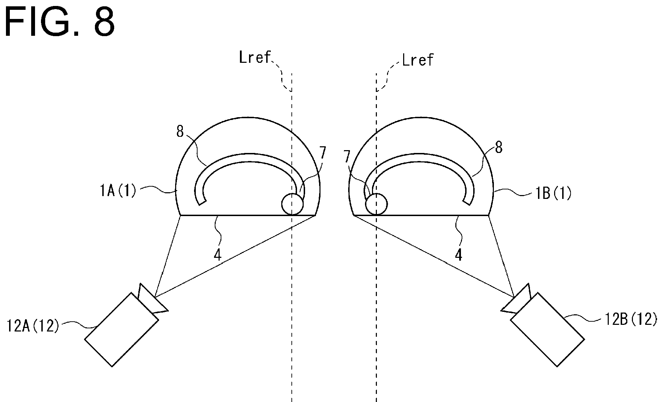

FIG. 8 is a schematic diagram showing the arrangement layout of the imaging device 12 according to another embodiment, as viewed from above the pair of carcasses 1. In this embodiment, the cutting position identification system 10 is equipped with a plurality of imaging devices 12. The plurality of imaging devices 12 includes a first imaging device 12A disposed in a position corresponding to one of the pair of carcasses 1 (left carcass 1A) and a second imaging device 12B disposed in a position corresponding to the other (right carcass 1B). The first imaging device 12A is disposed on the breast side of the left carcass 1A relative to the reference line Lref corresponding to the left carcass 1A. The second imaging device 12B is disposed on the breast side of the right carcass 1B relative to the reference line Lref corresponding to the right carcass 1B. This allows each of the two imaging devices 12 to capture an image that is likely to show the connection portion 9 of each carcass 1, as described above.

In the embodiment shown in FIG. 8, the plurality of imaging devices 12 is arranged so that the corresponding carcass 1 is included in respective imaging ranges. That is, the first imaging device 12A is arranged so that only the left carcass 1A is included in the imaging range, and the second imaging device 12B is arranged so that only the right carcass 1B is included in the imaging range.

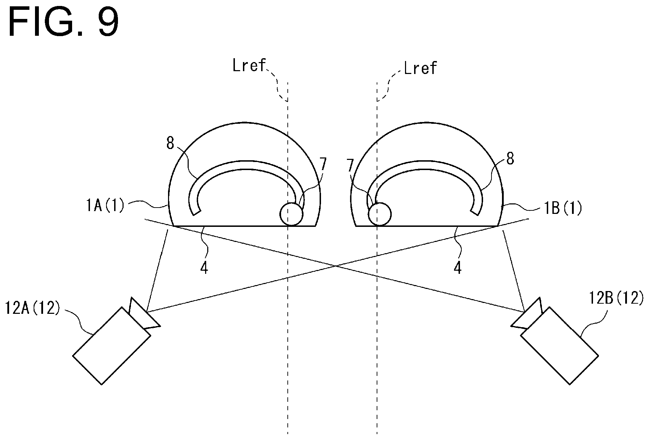

FIG. 9 is a modified example of FIG. 8. In this modification, two imaging devices 12 (first imaging device 12A and second imaging device 12B) are used as in the embodiment shown in FIG. 8, but the first imaging device 12A and the second imaging device 12B are arranged so that the pair of carcasses 1 is included in respective imaging ranges. That is, the first imaging device 12A and the second imaging device 12B are arranged so that both carcasses (left carcass 1A and right carcass 1B) are included in the imaging range of each imaging device.

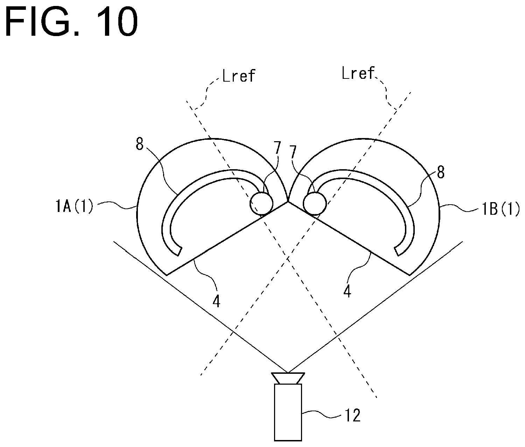

FIG. 10 is a schematic diagram showing the arrangement layout of the imaging device 12 according to another embodiment, as viewed from above the pair of carcasses 1. In this embodiment, the position of the imaging device 12 is the same as in the reference art (see FIG. 4), but the imaging device 12 is disposed on the breast side of each carcass 1 relative to the reference line Lref due to the variable grasping angle of the pair of carcasses 1 to be imaged. That is, in the above-described embodiments, the imaging device 12 is placed on the breast side of each carcass 1 as compared to the reference line Lref by changing the position of the imaging device 12 from the reference art, but the imaging device 12 can also be placed on the breast side of each carcass 1 as compared to the reference line Lref by changing the position or angle of the carcass 1 to be imaged from the reference art.

The position or angle of the carcass 1 can be changed by controlling a clamping mechanism which grasps the carcass 1.

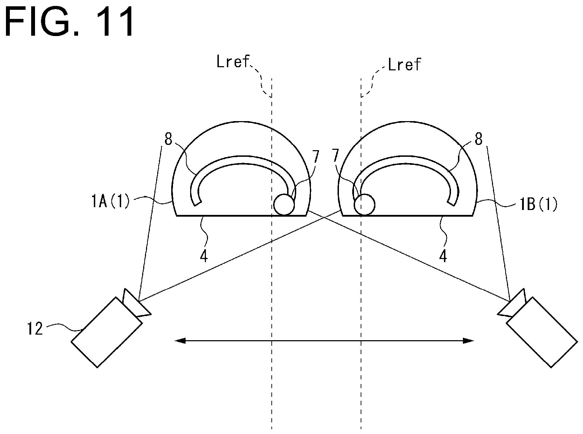

FIG. 11 is a schematic diagram showing the arrangement layout of the imaging device according to another embodiment, as viewed from above the pair of carcasses 1. In this embodiment, the imaging device 12 is a single unit and is movable relative to the pair of carcasses 1 to be imaged. Specifically, when the left carcass 1A is to be imaged, the imaging device 12 is moved into the left position in FIG. 11, so that the imaging device 12 is disposed on the breast side of the left carcass 1A relative to the reference line Lref. Conversely, when the right carcass 1B is to be imaged, the imaging device 12 is moved into the right position in FIG. 11, so that the imaging device 12 is disposed on the breast side of the right carcass 1B relative to the reference line Lref. By moving the single imaging device 12 in this way, at least one of the position or angle thereof can be changed so that the imaging device 12 is disposed on the breast side of each carcass 1 relative to the reference line Lref.

As described above, according to the above-described embodiments, it is possible to realize the cutting position identification system 10 and the cutting position identification method whereby it is possible to accurately identify the cutting position L using an image captured by the imaging device 12 disposed on the breast side of the carcass 1 relative to the reference line Lref that extends from the spine 7 in a direction perpendicular to the cut surface 4 of the carcass 1.

In addition, the components in the above-described embodiments may be appropriately replaced with known components without departing from the spirit of the present disclosure, or the above-described embodiments may be appropriately combined.

The contents described in the above embodiments would be understood as follows, for instance.
(1) A cutting position identification system according to one aspect, for identifying a cutting position of a pair of carcasses which has been divided into right and left halves along a spine, is provided with: at least one imaging device disposed on a breast side of at least one of the pair of carcasses relative to a reference line that extends from the spine in a direction perpendicular to a cut surface of the carcass; and an identification device for identifying the cutting position that passes between ribs using an image captured by the at least one imaging device.
   According to the above aspect (1), the cutting position on the cut surface of the carcass is identified using the image captured by the imaging device. The imaging device is disposed on the breast side of the carcass relative to the reference line that extends from the spine in a direction perpendicular to the cut surface of the carcass. This allows at least part of the connection portion between the spine and the ribs, or its vicinity, which is often a blind spot or shadow in a front view of the carcass, to be captured. Using the image captured in this manner, the cutting position can be accurately identified based on the positional relationship between the spine and the ribs.
(2) In another aspect, in the above aspect (1), the at least one imaging device is arranged so that at least part of a connection portion between the spine and the ribs is captured.
   According to the above aspect (2), the image captured by the imaging device includes at least part of the connection portion between the spine and the ribs. Using such an image, the positional relationship between vertebra constituting the spine and ribs can be well recognized, allowing the cutting position of the carcass to be accurately identified.
(3) In another aspect, in the above aspect (1) or (2), an angle formed by a line passing through the spine and the imaging device with respect to the reference line is in a range of 0 to 80 degrees.
   According to the above aspect (3), since the imaging device is in a position where the above angle is in the range of 0 to 80 degrees, it is possible to suitably capture an image showing at least part of the connection portion between the spine and the ribs.
(4) In another aspect, in any of the above aspects (1) to (3), the at least one imaging device includes: a first imaging device disposed in a position corresponding to one of the pair of carcasses; and a second imaging device disposed in a position corresponding to the other of the pair of carcasses.
   According to the above aspect (4), the cutting position in each of the pair of carcasses can be suitably identified by using two imaging devices corresponding to the respective carcasses.
(5) In another aspect, in the above aspect (4), the first imaging device and the second imaging device are arranged so that the pair of carcasses is included in respective imaging ranges.
   According to the above aspect (5), when two imaging devices are used, the position of the imaging devices may be set so that the imaging range of each device includes both of the pair of carcasses.
(6) In another aspect, in any of the above aspects (1) to (5), a grasping angle of the pair of carcasses is variable.
   According to the above aspect (6), since the grasping angle of the carcass to be imaged is variable, the position of the imaging device can be set so that it is on the breast side of the carcass relative to the reference line extending from the spine in a direction perpendicular to the cut surface of the carcass.
(7) In another aspect, in any of the above aspects (1) to (6), the at least one imaging device has a variable position or angle relative to the carcasses.
   According to the above aspect (7), since the position or angle of the imaging device relative to the carcass is variable, the position of the imaging device can be set so that it is on the breast side of the carcass relative to the reference line extending from the spine in a direction perpendicular to the cut surface of the carcass.
(8) In another aspect, in any of the above aspects (1) to (7), the identification device is configured to identify the cutting position based on the image, using a learning model that has been trained using the image acquired in the past as teacher data.
   According to the above aspect (8), a learning model for predicting the cutting position from the image can be constructed using the results of identifying the cutting position using the image as described above as teacher data. The use of the learning model thus constructed enables accurate identification of the carcass cutting position based on the image.
(9) A cutting position identification method according to one aspect, for identifying a cutting position of a pair of carcasses which has been divided into right and left halves along a spine, includes: a step of imaging at least one of the pair of carcasses by at least one imaging device disposed on a breast side of the carcass relative to a reference line that extends from the spine in a direction perpendicular to a cut surface of the carcass; and a step of identifying the cutting position that passes between ribs using the image.

According to the above aspect (9), the cutting position on the cut surface of the carcass is identified using the image captured by the imaging device. The imaging device is disposed on the breast side of the carcass relative to the reference line that extends from the spine in a direction perpendicular to the cut surface of the carcass. This allows at least part of the connection portion between the spine and the ribs, or its vicinity, which is often a blind spot or shadow in a front view of the carcass, to be captured. Using the image captured in this manner, the cutting position can be accurately identified based on the positional relationship between the spine and the ribs.

### Reference Signs List

- 1: Carcass
- 1A: Left carcass
- 1B: Right carcass
- 2: Anterior part
- 3: Posterior part
- 4: Cut surface
- 5: Leg
- 7: Spine
- 8: Rib
- 9: Connection portion
- 10: Cutting position identification system
- 12: Imaging device
- 12A: First imaging device
- 12B: Second imaging device
- 14: Cutting position identification device
- 18: Image acquisition unit
- 20: Storage unit
- 22: Cutting position prediction unit
- 24: Learning model
- L: Cutting position
- Lref: Reference line

## Claims

1. A cutting position identification system for identifying a cutting position of a pair of carcasses which has been divided into right and left halves along a spine, comprising:
at least one imaging device disposed on a breast side of at least one of the pair of carcasses relative to a reference line that extends from the spine in a direction perpendicular to a cut surface of the carcass; and
an identification device for identifying the cutting position that passes between ribs using an image captured by the at least one imaging device.

2. The cutting position identification system according to claim 1,
wherein the at least one imaging device is arranged so that at least part of a connection portion between the spine and the ribs is captured.

3. The cutting position identification system according to claim 1 or 2,
wherein an angle formed by a line passing through the spine and the imaging device with respect to the reference line is in a range of 0 to 80 degrees.

4. The cutting position identification system according to claim 1 or 2,
wherein the at least one imaging device includes:
a first imaging device disposed in a position corresponding to one of the pair of carcasses; and
a second imaging device disposed in a position corresponding to the other of the pair of carcasses.

5. The cutting position identification system according to claim 4,
wherein the first imaging device and the second imaging device are arranged so that the pair of carcasses is included in respective imaging ranges.

6. The cutting position identification system according to claim 1 or 2,
wherein a grasping angle of the pair of carcasses is variable.

7. The cutting position identification system according to claim 1 or 2,
wherein the at least one imaging device has a variable position or angle relative to the carcasses.

8. The cutting position identification system according to claim 1 or 2,
wherein the identification device is configured to identify the cutting position based on the image, using a learning model that has been trained using the image acquired in the past as teacher data.

9. A cutting position identification method for identifying a cutting position of a pair of carcasses which has been divided into right and left halves along a spine, comprising:
a step of imaging at least one of the pair of carcasses by at least one imaging device disposed on a breast side of the carcass relative to a reference line that extends from the spine in a direction perpendicular to a cut surface of the carcass; and
a step of identifying the cutting position that passes between ribs using the image.
